# EUROPEAN PATENT APPLICATION

(11) **EP 4 604 364 A1**
(43) Date of publication of application: **20.08.2025**
(21) Application number: 22962154.5
(22) Date of filing: 13.10.2022
(51) Int. Cl.: H02K 3/14, H02K 3/50, H02K 1/14, H02K 15/00, H02K 15/06, H02K 15/085

(54) **STATOR OF ROTATING ELECTRIC MACHINE AND METHOD FOR MANUFACTURING SAME**

(71) Applicant: LG Magna e-Powertrain Co., Ltd., Seo-gu, Incheon 22744 (KR)
(72) Inventor: KANG, Yongsoo, Incheon 22744 (KR); KIM, Hyunsoo, Incheon 22744 (KR); LEE, Taewoong, Incheon 22744 (KR)
(74) Representative: Vossius & Partner Patentanwälte Rechtsanwälte mbB
(86) International application number: PCT/KR2022/015450
(87) International publication number: WO 2024/080404

(57) **Abstract**

The present invention relates to a stator of a rotating electric machine and a method for manufacturing same. The stator of the rotating electric machine of the present invention comprises: a stator core provided with a plurality of slots spaced apart from each other along the circumferential direction; and a stator coil wound on the stator core, wherein the stator coil is configured to be provided with a plurality of magnet wire modules including a plurality of magnet wires, each having a straight shape disposed along the axial direction, and molding parts surrounding and fixing the plurality of magnet wires, the plurality of magnet wire modules are configured to be inserted into the plurality of slots, respectively, and the plurality of magnet wires are configured to be bent along the circumferential direction of the stator core so as to be in contact with each other, and then, to be connected to conduct electricity. Accordingly, the bending operation of the magnet wire can be suppressed before slot insertion to facilitate the insertion of the magnet wire.

## Description

### Technical Field

The present disclosure relates to a stator of a rotating electric machine and a method for manufacturing the same.

### Background Art

As noted, a rotating electric machine refers to a machine having a stator and a rotor provided to be rotatable with respect to the stator.

Some of the rotating electric machines are configured with a generator that converts mechanical energy into electrical energy, while others are configured with an electric motor that converts electrical energy into mechanical energy. Some of the rotating electric machines are also configured to optionally function as either an electric motor or generator respectively.

The stator of the rotating electric machine is provided with a stator core having slots and teeth and a stator coil wound by way of the slots.

The stator of the rotating electric machine is advantageous in increasing power as a ratio (fill factor, occupancy rate) of a cross-sectional area of a conductor of the stator coil to an area inside the slot is higher.

Taking this into consideration, some stators use a stator coil in which conductor segments, hairpins, or magnet wires (hereinafter referred to as "magnet wires") formed by bending a flat copper wire with a relatively large conductor cross-sectional area into a "U" shape are connected in a preset pattern.

The magnet wire typically has a conductor with a square cross-section and a film formed of an insulating material surrounding an outer surface of the conductor.

The magnet wire has a pair of insertion portions respectively inserted into different slots of the stator core, and a connection portion connecting ends of the pair of insertion portions.

A pair of insertion portions of the magnet wire are formed in parallel to each other to be spaced apart at a preset spacing (slot pitch spacing), and the connection portion is formed by bending in an approximately inverted "U" or inverted "V" shape.

A pair of insertion portions of the magnet wire are respectively inserted into different slots of the stator core, and the insertion portions of the magnet wire are spaced apart from each other in a radial direction inside the slots of the stator core to form a plurality of layers.

However, in the stator of such a conventional rotating electric machine, the magnet wires inserted into different positions (layers) inside the slots of the stator core are formed to have different sizes and shapes prior to being inserted into the corresponding slot of the stator core, so there is a problem in that much time and effort is required for assembling the magnet wires.

In addition, in the stator of such a conventional rotating electric machine, an insulating paper is first inserted into the slot of the stator core prior to inserting the magnet wire into the slot to insulate the magnet wire and the stator core, and thus interference between the magnet wire and the insulating paper may occur when coupling the magnet wire, and as a result, there is a problem in that damage and displacement of the insulating paper may occur.

In addition, there is a problem in that an insulation failure of the magnet wire occurs due to the damage and displacement of the insulating paper.

In addition, in the stator of such a conventional rotating electric machine, a structure is provided in which two insertion portions are inserted correspondingly into two slots spaced apart along a circumferential direction among a plurality of slots of the stator core, and thus the magnet wire is required to have a relatively high shape precision. Accordingly, the magnet wire is bent with a relatively high pressing force during bending forming, and thus there is a problem in that the insulation performance may be deteriorated, such as the occurrence of so-called pinholes in the coating of the magnet wire.

In addition, in the stator of such a conventional rotating electric machine, the magnet wire is inserted into and coupled to the corresponding slot, and then an insulating material, such as varnish, is injected into the slot, and thus there is a problem in that a relatively large amount of time and effort is required to manufacture a stator coil using the magnet wire.

### [Citation List]

### [Patent Literature]

Korean Patent Publication No. 10-2021-0129440 (published on October 28, 2021)

### Disclosure of Invention

### Technical Problem

Accordingly, an aspect of the present disclosure is to provide a stator of a rotating electric machine that can suppress a bending operation of a magnet wire prior to being inserted into a slot so as to facilitate the insertion of a magnet wire.

In addition, another aspect of the present disclosure is to provide a stator of a rotating electric machine that can suppress interference between a magnet wire and an insulating paper when the magnet wire is inserted into a slot.

In addition, still another aspect of the present disclosure is to provide a stator of a rotating electric machine that can eliminate a varnish injection process between a magnet wire and a slot.

### Solution to Problem

In order to solve the foregoing problems, a stator of a rotating electric machine according to the present disclosure has a technical feature of inserting a straight magnet wire module into a slot.

Specifically, a plurality of straight magnet wires may be arranged in a radial direction so as to be inserted into an slot, the plurality of magnet wires may be molded to form a plurality of magnet wire modules, and the plurality of magnet wire modules may be inserted into the slot, thereby eliminating a bending operation prior to inserting the magnet wires into the slot.

Thereby, inserting the magnet wire into the slot may be facilitated.

In one embodiment of the present disclosure, the stator of the rotating electric machine may include a stator core having a plurality of slots spaced apart from one another along a circumferential direction; and a stator coil wound around the stator core, wherein the stator coil is provided with a plurality of magnet wire modules having a plurality of magnet wires each having a straight shape positioned along an axial direction and a molding part surrounding and fixing the plurality of magnet wires, the plurality of magnet wire modules are respectively inserted into the plurality of slots, and the plurality of magnet wires are bent along a circumferential direction of the stator core and then electrically connected to be in contact with one another.

Thereby, a bending operation of the magnet wire may be suppressed prior to being inserted into the slot of the stator core to facilitate the insertion of the magnet wire.

In one embodiment of the present disclosure, the molding part may be provided with an outer body 191 positioned outside the plurality of slots.

Thereby, a size of the molding part may be reduced, and the manufacture of the molding part may be facilitated.

In one embodiment of the present disclosure, the outer body 191 may be provided with a stopper that comes into contact with an edge of the slot along an axial direction.

Thereby, the magnet wire module may be coupled to the stator at an accurate position.

In one embodiment of the present disclosure, wherein the plurality of magnet wires may each be provided with a bending section that bends along a circumferential direction of the stator core, and
the outer body 191 may be provided with a bending section support portion that comes into contact with the bending section to support the bending section.

Thereby, bending of the plurality of magnet wires may be facilitated.

In addition, the occurrence of a transverse movement (clearance) between the plurality of magnet wires may be suppressed.

In one embodiment of the present disclosure, the molding part may be provided with an inner body positioned inside the slot.

Thereby, the insulation performance between the plurality of magnet wires and the stator core may be improved.

In one embodiment of the present disclosure, the inner body may be provided with an outer surface spaced apart from an inner surface of the slot, and

the outer surface of the inner body may be provided with a protruding portion that protrudes so as to come into contact with the inner surface of the slot.

Thereby, the magnet wire may be spaced apart from an inner surface of the slot by a preset distance.

Here, the protruding portion may be configured to be press-fitted into an inside of the slot.

Thereby, the occurrence of a clearance between the plurality of magnet wires may be suppressed.

In one embodiment of the present disclosure, the inner body may be provided with both side surfaces arranged on both sides along a circumferential direction of the stator core and an inner side surface and an outer side surface arranged on both sides along a radial direction of the stator core, and

the protruding portions may be respectively provided on the both side surfaces and the outer side surface.

Thereby, the occurrences of circumferential and radial clearances between the plurality of magnet wires may be respectively suppressed.

In one embodiment of the present disclosure, the protruding portion may be formed to extend along an axial direction.

Here, the protruding portion may be formed with a length corresponding to an axial length of the slot.

In one embodiment of the present disclosure, the inner body may be provided with a protruding end portion that protrudes outward from the slot along an axial direction of the stator core,
the plurality of magnet wires may be provided with bending sections that bend along a circumferential direction of the stator core, and
the protruding end portion may be provided with bending section support portions that come into contact with the bending sections of the plurality of magnet wires to support the bending sections.

Thereby, bending of the plurality of magnet wires may be facilitated.

In addition, the occurrence of a transverse movement (clearance) between the plurality of magnet wires may be suppressed.

In one embodiment of the present disclosure, the plurality of magnet wires arranged in a radial direction of the stator core may be alternately bent to one side and the other side of the circumferential direction of the stator core, and

the bending section support portions of the inner body may be formed alternately on both side surfaces along the circumferential direction of the stator core.

Thereby, a distance between the bending section support portions may be secured so as to suppress damage to the bending section support portions from occurring.

In one embodiment of the present disclosure, the plurality of magnet wires may be provided with an insertion section positioned inside the slot along an axial direction of the stator core,
the inner body may be provided with a shortened length compared to a length of the slot along the axial direction of the stator core, and
the insertion section of the plurality of magnet wires may be provided with a first section insulated by the inner body and a second section insulated by an insulating material.

Thereby, a size (length) of the molding part (inner body) may be reduced.

In addition, a size or input amount of the insulating material may be reduced.

In one embodiment of the present disclosure, the second section may be surrounded and insulated by a plate-shaped insulating sheet prior to the plurality of magnet wires being inserted into the plurality of slots.

Thereby, a process of pre-inserting insulating paper into an inside of the slot prior to inserting the plurality of magnet wires into the slot may be eliminated.

According to this configuration, interference between the plurality of magnet wires and the insulating paper may be eliminated from occurring when the plurality of magnet wires are inserted.

Thereby, the insertion of the plurality of magnet wires into the slot may be facilitated.

In one embodiment of the present disclosure, the insulating material of the second section may be provided with a liquid foam material applied to the plurality of magnet wires prior to the plurality of magnet wires being inserted into the plurality of slots, and an insulating paper surrounding the liquid foam material.

Thereby, the insertion of the plurality of magnet wires into the slot may be facilitated.

In addition, a size of a molding part of the plurality of magnet wire modules may be reduced, and the manufacture of the molding part may be facilitated.

In addition, since the insulating paper is not pre-inserted into the slot, interference between the plurality of magnet wires and the insulating paper may be suppressed, and the insertion of the plurality of magnet wires into the slot may be facilitated.

In one embodiment of the present disclosure, the liquid foam material may be configured to foam by heating subsequent to the plurality of magnet wires being inserted into the plurality of slots.

Thereby, the plurality of magnet wires are spaced apart from an inner wall of the slot, and an insulation performance may be improved by the foam material foamed (expanded) in a space between the plurality of magnet wires and the inner wall of the slot and the insulating paper.

In one embodiment of the present disclosure, the molding part may include an outer body 191 positioned outside a slot of the stator core; and an inner body connected to the outer body 191 and positioned inside the slot.

Thereby, the insulation performance of the plurality of magnet wires may be improved.

In addition, the occurrence of a clearance between the plurality of magnet wires may be suppressed.

In one embodiment of the present disclosure, the outer body 191 may be provided with a stopper that comes into contact with an edge of the slot along an axial direction.

Thereby, the plurality of magnet wires may be precisely coupled to the stator core at preset positions.

In one embodiment of the present disclosure, the plurality of magnet wires may be each provided with an axial section positioned along the axial direction and a circumferential section extending in a circumferential direction from the axial section,
the axial section may pass through an inside of the slot,
the circumferential section may be positioned outside the slot, and
the plurality of magnet wires may be configured to allow the circumferential sections of different magnet wires to be electrically connected to one another.

Thereby, a bending operation of the plurality of magnet wires may be reduced so as to suppress the occurrence of an insulation failure caused by the bending operation of the plurality of magnet wires.

In addition, the bending operation of the plurality of magnet wires may be reduced to facilitate the manufacture of the plurality of magnet wires.

Meanwhile, according to another field of the present disclosure, there is provided a method of manufacturing a stator of a rotating electric machine including a stator core having a plurality of slots along a circumferential direction and a stator coil having a plurality of magnet wires each having a straight shape positioned along an axial direction and capable of being inserted into the slots of the stator core, and the method may include arranging the plurality of magnet wires to be spaced apart along a radial direction of the stator core, and forming a molding part surrounding and fixing a circumference of the plurality of magnet wires to form a plurality of magnet wire modules; inserting the plurality of magnet wire modules into the plurality of slots, respectively; bending the plurality of magnet wires to one side or the other side along a circumferential direction of the stator core so as to come into contact with one another; and electrically connecting the plurality of magnet wires to form the stator coil.

Thereby, the bending operation of the plurality of magnet wires prior to being inserted into the slot may be suppressed so as to facilitate the plurality of magnet wires being inserted into the slot.

In one embodiment of the present disclosure, the method may further include cutting end portions of the plurality of magnet wires so as to allow the end portions of the plurality of magnet wires to have the same length from the stator core along an axial direction prior to forming the stator coil.

Thereby, a welding operation of the plurality of magnet wires may be facilitated.

In one embodiment of the present disclosure, the plurality of magnet wires may be provided with an insertion section positioned inside the slot,
the molding part may be provided with an inner body formed to surround a part of the insertion section, and
the method may further include insulating the remainder of the insertion section prior to inserting the plurality of magnet wires into the plurality of slots.

Thereby, a size of the molding part may be reduced to facilitate the manufacture of the molding part.

In addition, the insertion section may be insulated prior to inserting the plurality of magnet wires into the slot, thereby efficiently inserting the plurality of magnet wires into the slot.

### Advantageous Effects of Invention

As described above, according to one embodiment of the present disclosure, a stator coil may be provided with a plurality of magnet wire modules having a plurality of straight magnet wires arranged along an axial direction and a molding part surrounding and fixing the plurality of magnet wires, thereby suppressing a bending operation of the plurality of magnet wires prior to being inserting into a slot.

In addition, the plurality of magnet wires may be efficiently inserted into the slot.

In addition, the molding part may be provided with an outer body 191 positioned at an outside of the slot so as to reduce a size of the molding part and facilitate the manufacture of the molding part.

In addition, the outer body 191 may be provided with a stopper that comes into contact with an edge of the slot along an axial direction, thereby allowing the magnet wire module to be coupled to the stator at an accurate position.

In addition, the outer body 191 may provided with a bending section support portion that comes into contact with the bending section to support the bending section, thereby facilitating the bending of the plurality of magnet wires.

In addition, the molding part may be provided with an inner body positioned inside the slot, thereby improving the insulation performance of the plurality of magnet wires and the stator core.

In addition, an outer surface of the inner body may be provided with a protruding portion that protrudes to come into contact with an inner surface of the slot, thereby allowing the magnet wire to be spaced apart from the inner surface of the slot by a preset distance.

In addition, a bending section support portion that comes into contact with a bending section of the plurality of magnet wires to support the bending section may be provided on a protruding end portion of the inner body, thereby facilitating the bending of the plurality of magnet wires.

In addition, the insertion section of the plurality of magnet wires may be provided with a first section insulated by the inner body and a second section insulated by an insulating material, thereby reducing a size of the molding part to facilitate the manufacture of the molding part.

In addition, the second section may be configured to be surrounded by a plate-shaped insulating sheet prior to the plurality of magnet wires being inserted into the plurality of slots, thereby preventing interference with an insulating paper when the plurality of magnet wires are inserted into the slots.

In addition, the second section may be configured to be insulated by a liquid foam material filled between the plurality of magnet wires and an insulating paper surrounding the liquid foam material prior to the plurality of magnet wires being inserted into the plurality of slots, thereby allowing the plurality of magnet wires to be efficiently inserted into the slots.

In addition, the liquid foam material may be configured to foam by heating subsequent to inserting the plurality of magnet wires into the plurality of slots, thereby allowing the plurality of magnet wires to be efficiently inserted into the slots, and improving the insulation performance of the plurality of magnet wires.

In addition, the molding part may be provided with an outer body 191 positioned outside the slot of the stator core and an inner body connected to the outer body 191 and positioned inside the slot, thereby improving the insulation performance of the plurality of magnet wires.

In addition, the plurality of magnet wires may be each provided with an axial section positioned along the axial direction and a circumferential section extending in a circumferential direction from the axial section, the axial section may pass through an inside of the slot, the circumferential section may be positioned outside the slot, and the plurality of magnet wires may be connected so as to allow the circumferential sections of different magnet wires to be electrically conductive to each other, thereby suppressing a bending operation of the plurality of magnet wires, and suppressing the occurrence of an insulation failure of the plurality of magnet wires due to the bending operation.

### Brief Description of Drawings

FIG. 1 is a perspective view of a stator of a rotating electric machine according to one embodiment of the present disclosure.
FIG. 2 is a front view of the stator of the rotating electric machine in FIG. 1.
FIG. 3 is a plan view of the stator of the rotating electric machine in FIG. 1.
FIG. 4 is a cross-sectional view of the stator of the rotating electric machine in FIG. 1.
FIG. 5 is a circuit diagram of a stator coil in FIG. 1.
FIG. 6 is an enlarged view of a slot of a stator core in FIG. 1.
FIG. 7 is a side view prior to bending a magnet wire in FIG. 1.
FIG. 8 is a side view subsequent to bending the magnet wire in FIG. 1.
FIG. 9 is a perspective view prior to coupling a magnet wire module in FIG. 1.
FIG. 10 is a cross-sectional view subsequent to inserting the magnet wire module in FIG. 9.
FIG. 11 is a perspective view of a molding part in FIG. 9.
FIG. 12 is a plan view of the molding part in FIG. 11.
FIG. 13 is a bottom view of the molding part in FIG. 11.
FIG. 14 is an enlarged view of the molding part in FIG. 13.
FIG. 15 is a cross-sectional view of a stator of a rotating electric machine according to another embodiment of the present disclosure.
FIG. 16 is a perspective view prior to coupling a magnet wire module in FIG. 15.
FIG. 17 is an enlarged view of the magnet wire module in FIG. 15.
FIG. 18 is a cross-sectional view of a stator of a rotating electric machine according to another embodiment of the present disclosure.
FIG. 19 is a perspective view prior to coupling a magnet wire module in FIG. 18.
FIG. 20 is an enlarged view of the magnet wire module in FIG. 18.

### Mode for the Invention

Hereinafter, embodiments disclosed herein will be described in detail with reference to the accompanying drawings. Herein, even in different embodiments, the same or similar reference numerals are designated to the same or similar configurations, and the description thereof will be substituted by the earlier description. A singular expression used herein may include a plural expression unless clearly defined otherwise in the context. In describing embodiments disclosed herein, moreover, the detailed description will be omitted when specific description for publicly known technologies to which the disclosure pertains is determined to obscure the gist of the present disclosure. Also, it should be noted that the accompanying drawings are merely illustrated to easily explain the concept of the invention, and therefore, they should not be construed to limit the technological concept disclosed herein by the accompanying drawings.

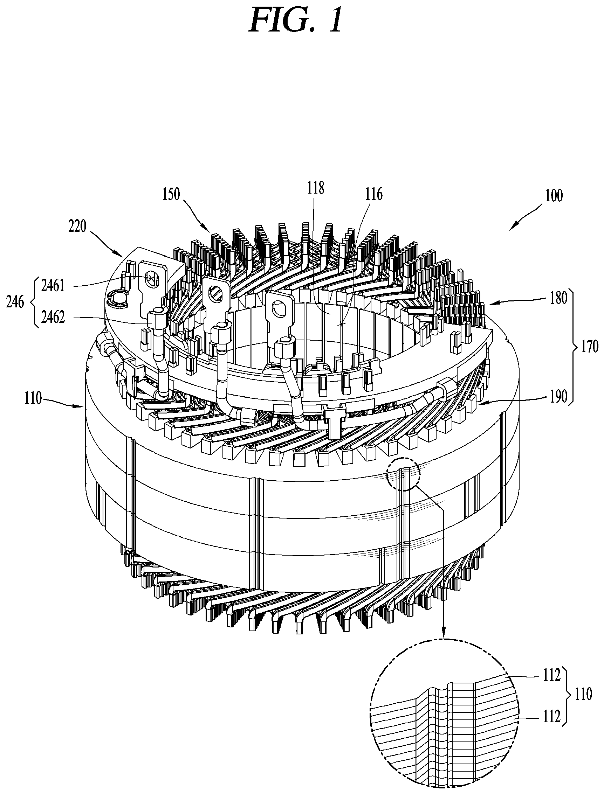

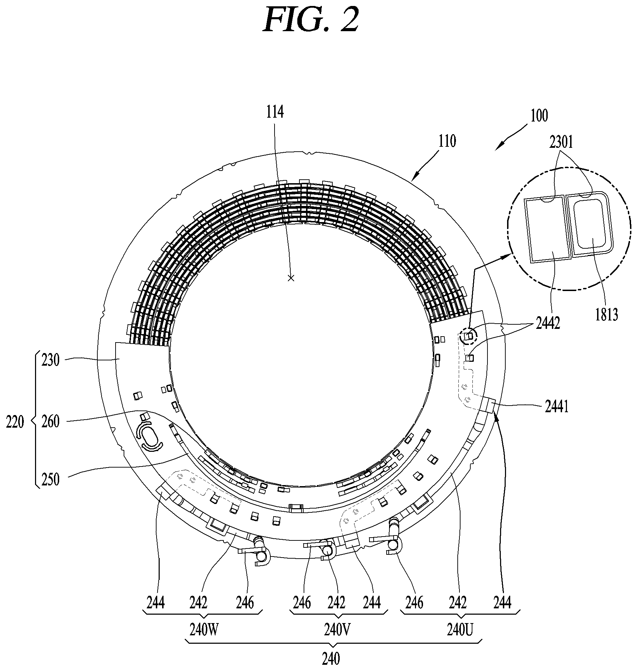

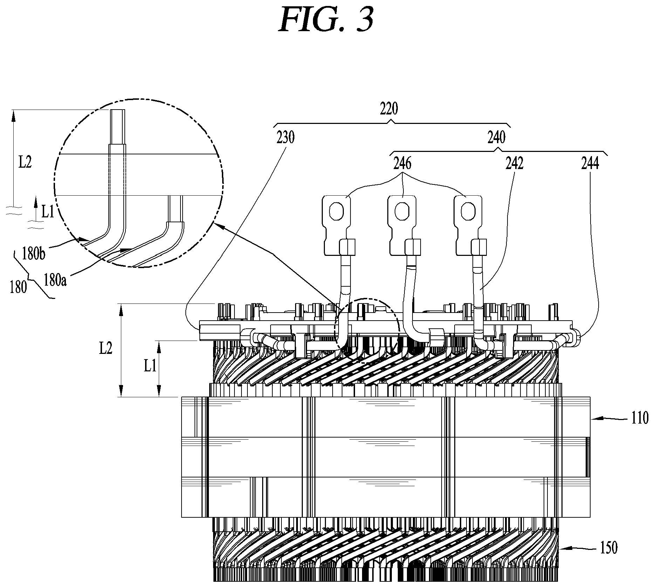

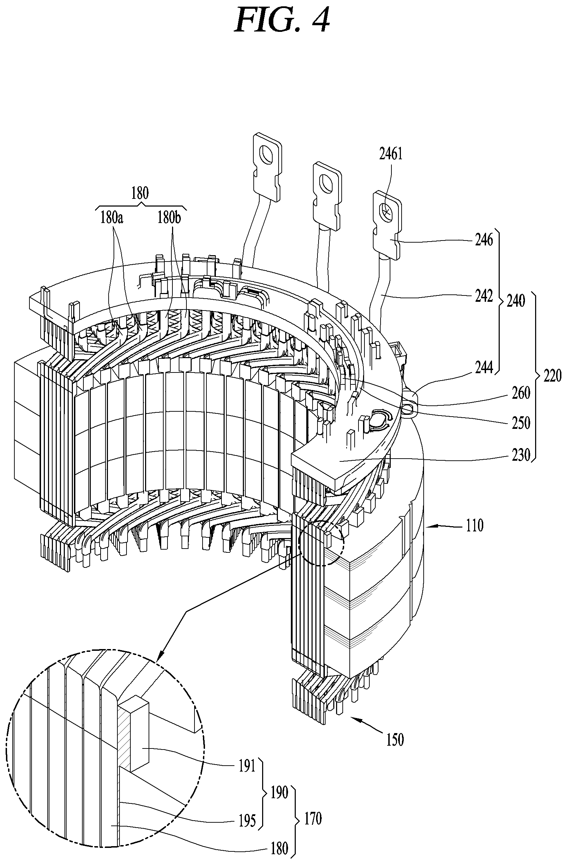

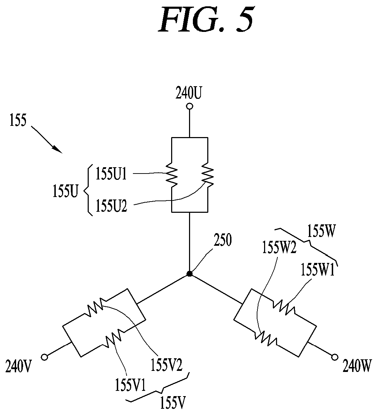

FIG. 1 is a perspective view of a stator of a rotating electric machine according to one embodiment of the present disclosure, FIG. 2 is a front view of the stator of the rotating electric machine in FIG. 1, FIG. 3 is a plan view of the stator of the rotating electric machine in FIG. 1, FIG. 4 is a cross-sectional view of the stator of the rotating electric machine in FIG. 1, and FIG. 5 is a circuit diagram of a stator coil in FIG. 1. As shown in FIGS. 1 to 4, a stator 100 of a rotating electric machine according to one embodiment of the present disclosure is provided with a stator core 110 and a stator coil 150.

The stator core 110 may be implemented, for example, in a cylindrical shape.

A rotor receiving hole 114 in which a rotor (not shown) is rotatably received may be formed inside the stator core 110, for example.

The rotor receiving hole 114 may be formed to pass through the stator core 110 along an axial direction.

Here, the axial direction denotes a direction parallel to a rotation shaft of the rotor.

The stator core 110 may be formed, for example, by laminating a plurality of electrical steel plates 112 in an insulating manner.

The stator core 110 may be laminated, for example, along the axial direction.

The stator core 110 is provided with, for example, a plurality of slots 116 spaced apart along a circumferential direction.

The plurality of slots 116 are formed to pass through the stator core 110 along an axial direction.

The stator core 110 is provided with a plurality of teeth 118 spaced apart along a circumferential direction.

The plurality of slots 116 and the plurality of teeth 118 are formed alternately along a circumferential direction.

The plurality of slots 116 and plurality of teeth 118 may each be configured with, for example, 48 pieces.

In this embodiment, it is illustrated a case where the plurality of slots 116 are implemented with 48 pieces, but this is only an example and is not limited thereto.

The stator coil 150 is wound around the stator core 110.

The stator coil 150 is configured to be connected to, for example, a three-phase (U-phase, V-phase, W-phase) power supply.

The stator coil 150 is provided with, for example, a plurality of phase coils 155 each connected to a three-phase power supply.

The plurality of phase coils 155 are provided with, for example, a U-phase coil 155U, a V-phase coil 155V, and a W-phase coil 155W, as shown in FIG. 5.

The U-phase coil 155U, V-phase coil 155V, and W-phase coil 155W can be configured to be connected in parallel to the corresponding phase (U-phase, V-phase, W-phase) power supplies, for example.

Specifically, the U-phase coil 155U may include a first U-phase coil 155U1 and a second U-phase coil 155U2 that are connected in parallel to each other.

The V-phase coil 155V may include a first V-phase coil 155V1 and a second V-phase coil 155V2 that are connected in parallel to each other.

The W-phase coil 155W may include a first W-phase coil 155W1 and a second W-phase coil 155W2 connected in parallel to each other.

In this embodiment, the U-phase coil 155U, the V-phase coil 155V, and the W-phase coil 155W are configured to have two parallel coils each connected in parallel to the corresponding phase (U-phase, V-phase, W-phase) power supply, for example, but this is only an example, and is not limited thereto.

The stator coil 150 is provided with a plurality of magnet wire modules 170 respectively inserted into the plurality of slots 116.

The plurality of magnet wire modules 170 are each configured with a plurality of magnet wires 180 having straight shapes arranged along an axial direction and a molding part 190 surrounding and fixing the plurality of magnet wires 180.

The U-phase coil 155U, the V-phase coil 155V, and the W-phase coil 155W are each configured with a preset number of the plurality of magnet wire modules 170.

The magnet wires 180 of the preset number of the plurality of magnet wire modules 170 may be connected in series with one another in a preset pattern to form an electric circuit.

The stator coil 150 is provided with a connection ring 220 that connects the plurality of phase coils 155 (U-phase coil 155U, V-phase coil 155V, W-phase coil 155W).

The connection ring 220 may be configured to form, for example, a so-called Y connection that electrically connects each one end portion of the plurality of phase coils 155 to one another.

The connection ring 220 may be implemented in an arc shape, for example.

The connecting ring 220 is formed of, for example, an insulating member, and provided with a body 230 having an arc shape.

In this embodiment, the body 230 of the connection ring 220 is implemented in an arc shape corresponding to a half of a circumference of the stator core 110.

The connection ring 220 is provided with a plurality of power connection portions to allow the plurality of phase coils 155 to be connected to each phase (U phase, V phase, W phase) of a three-phase AC power supply.

The plurality of power connection portions have, for example, a U-phase power connection portion, a V-phase power connection portion, and a W-phase power connection portion.

The plurality of power connection portions (U-phase power connection portion, V-phase power connection portion, and W-phase power connection portion) each have, for example, a lead wire and a connection member having one side connected to the lead wire and the other side connected to a phase coil 155.

One side of the lead wire protrudes in an axial direction and the other side extends along a circumferential direction to be coupled to the connection member.

The lead wire is each provided with a terminal connected to an external power source.

The terminal has a plate shape.

The terminal is provided with a through hole and a lead wire coupling portion to which the lead wire is coupled.

One side of the connection member is exposed to the outside of the body 230 of the connecting ring 220, and the other side of the connection member protrudes outward from the body 230 by way of an inside of the body 230.

Referring to FIG. 2, one side of the connection member is provided with a lead wire connection portion to which the lead wire is connected, and the other side is formed with branch portions that can be connected to two parallel coils, respectively.

Thereby, a current applied from the lead wire may be applied to each of the parallel coils.

The connection ring 220 is provided with a neutral line that electrically connects each one end portion of the plurality of phase coils 155.

The connection ring 220 is provided with a jumper wire that electrically connects a plurality of magnet wires 180 spaced apart from one another along a circumferential direction of the stator core 110 among the plurality of coils 155. The jumper line is positioned such that an end portion thereof is exposed to the outside by way of an inside of the body 230 of the connecting ring 220.

Meanwhile, as shown in FIG. 3, the plurality of phase coils 155 (U-phase coil 155U, V-phase coil 155V, and W-phase coil 155W) are each configured with a first type magnet wire 180a having a first length L1 from the stator core 110 along an axial direction, and a second type magnet wire 180b having a second length L2 extending by a preset length compared to the first length L1 from the stator core 110 along an axial direction.

Here, the second length L2 includes a length of an extension portion that is extended by a preset length along an axial direction compared to the first length L1.

Specifically, the plurality of phase coils 155 are each configured with a plurality of magnet wire modules 170, and the plurality of magnet wires 180 of the plurality of magnet wire modules 170 may be configured with the first type magnet wire 180a and the second type magnet wire 180b.

The second type magnet wire 180b is coupled to the connection ring 220.

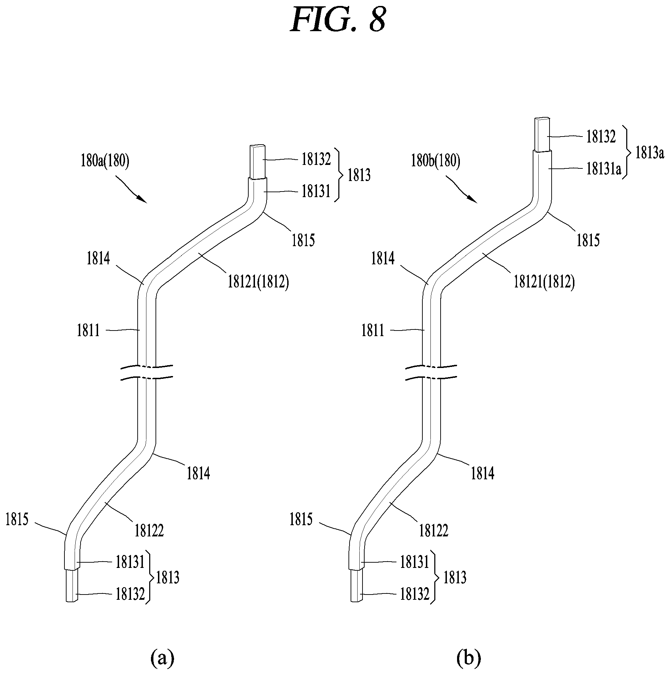

Specifically, referring to FIG. 8, among the plurality of magnet wires 180, the second type magnet wire 180b connected to the connection ring 220 has a connection end portion 1813a extending in an axial direction by a preset length compared to the first type magnet wire 180a that is not connected to the connection ring 220.

That is, the second type magnet wire 180b formed with the extension portion is further extended along an axial direction by the preset length such that a length of a covering section 18131a of the connection end portion 1813a can be coupled to the connecting ring 220.

Here, the extension portion may denote a covering section 18131a of the second type magnet wire 180b.

A length of a stripping section 18132 of the second type magnet wire 180b may be configured to be substantially the same as a stripping section 18132 of the first type magnet wire 180a.

The connection ring 220 is provided with a plurality of insertion portions 2301 into which extension portions (covering sections 18131a) of the plurality of phase coils 155 are respectively inserted.

The plurality of insertion portions 2301 are formed to pass through the body 230 of the connection ring 220 along an axial direction.

The plurality of insertion portions 2301 are each formed as a pair, for example, with connection end portions 1813 to be connected to each other or the connection member 244 and the connection end portion 1813a to come into contact with each other. The connection end portions 1813 that are paired with each other and the connection end portion 1813a paired with an end portion of the connection member 244 are formed to be arranged close to each other, for example, in a circumferential or radial direction.

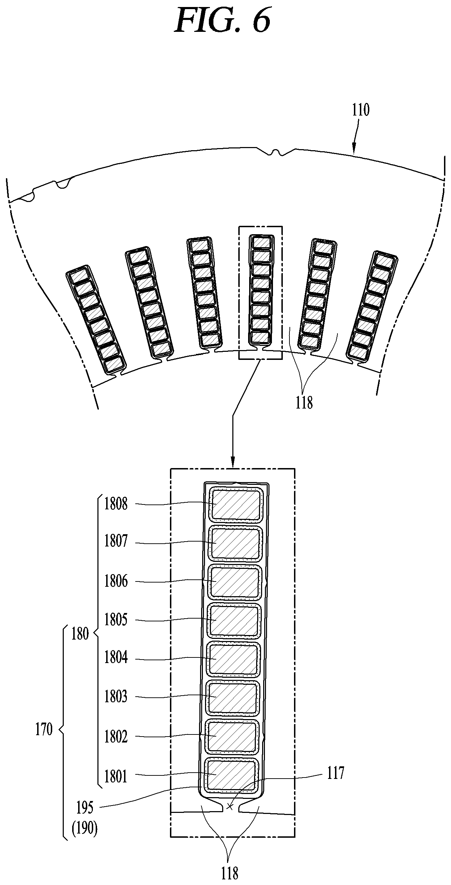

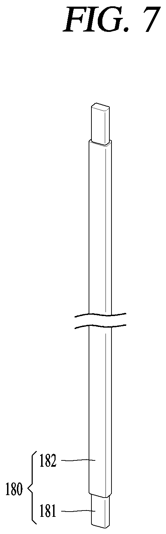

FIG. 6 is an enlarged view of a slot of a stator core in FIG. 1, FIG. 7 is a side view prior to bending a magnet wire in FIG. 1, and FIG. 8 is a side view subsequent to bending the magnet wire in FIG. 1. As shown in FIG. 6, the magnet wire modules 170 are respectively inserted into and coupled to the plurality of slots 116 of the stator core 110.

The magnet wire module 170 is configured with a plurality of magnet wires 180 arranged along a radial direction of the stator core 110 and a molding part 190 surrounding and fixing the plurality of magnet wires 180.

The plurality of magnet wires 180 may be implemented as, for example, eight pieces.

In this embodiment, a case where the plurality of magnet wires 180 are implemented as eight pieces is illustrated, but this is only an example, and is not limited thereto. The plurality of magnet wires may be configured with four or six pieces.

Specifically, the plurality of magnet wires 180 have, for example, a first magnet wire 1801 positioned at an innermost side of the slot 116, a second magnet wire 1802 positioned at an outside of the first magnet wire 1801 along a radial direction, a third magnet wire 1803, a fourth magnet wire 1804, a fifth magnet wire 1805, a sixth magnet wire 1806, a seventh magnet wire 1807, and an eighth magnet wire 1808, which are arranged at an outside of the second magnet wire 1802.

The plurality of magnet wires 180 are each configured with, for example, a conductor 181 capable of carrying electricity and a covering portion 182 surrounding and insulating an outer surface of the conductor 181.

The conductor 181 has, for example, a rectangular cross-section.

The cross section of the conductor 181 is provided with two long sides facing each other and two short sides facing each other.

In this embodiment, the plurality of magnet wires 180 are arranged such that the long side of the cross-section of the conductor 181 is along a circumferential direction of the stator core 110.

That is, the plurality of magnet wires 180 are each inserted into the slot 116 to allow the long side of the cross-section of the conductor 181 to be positioned in a width direction of the slot 116.

The plurality of magnet wires 180 are arranged such that the short side of the cross-section of the conductor 181 is along a radial direction of the stator core 110.

The molding part 190 is formed of, for example, an insulating member.

Specifically, the molding part 190 may be formed by inserting a plurality of magnet wires 180 (the first magnet wire 1801 to the eighth magnet wire 1808) arranged in a radial direction of the stator core 110 into preset positions inside a mold (not shown), and then injecting a molten synthetic resin member into the mold.

As shown in FIG. 7, the plurality of magnet wires 180 have straight shapes prior to bending.

The plurality of magnet wires 180 are inserted into the slot 116 of the stator core 110 while being arranged along an axial direction.

The plurality of magnet wires 180 are inserted into and coupled to the slot 116 so as to respectively protrude from both sides of the stator core 110 along an axial direction.

The plurality of magnet wires 180 are each provided with a stripping section 18132 in which the covering portion 182 is removed to expose the conductor 181 to the outside. The stripping sections 18132 may be respectively formed at both end portions of the plurality of magnet wires 180.

Thereby, the plurality of magnet wires 180 may be electrically connected by welding, respectively, on both sides (upper and lower sides in the drawing) of the stator core 110 along an axial direction.

The plurality of magnet wires 180 are bent (twisted) in one direction or the other direction along a circumferential direction of the stator core 110 while being inserted into the slot 116 of the stator core 110.

In this embodiment, the plurality of magnet wires 180 are each provided with a rectangular cross-section, and a long side of the rectangular cross-section is positioned in a circumferential direction, and therefore, when the plurality of magnet wires 180 are bent in a circumferential direction, the cross-sections (long sides) of the plurality of magnet wires 180 are arranged in an axial direction, and as a result, subsequent to bending, a support strength of the plurality of magnet wires 180 may be secured (increased) so as to suppress, when an external force is applied, vibration of a circumferential section 1812 of the plurality of magnet wires 180, which will be described later.

As shown in FIG. 8, the magnet wire 180 (the first type magnet wire 180a, the second type magnet wire 180b) subsequent to bending is provided with an axial section 1811 positioned along an axial direction, a circumferential section 1812 bent in a circumferential direction from the axial section 1811, and a connection end portion 1813 bent from the circumferential section 1812 to be positioned in the axial direction.

Here, the connection end portion 1813 may be configured to include a covering section 18131 having a covering portion 182 and a stripping section 18132 in which the covering portion 182 is stripped to exposed the conductor 181 to the outside.

The circumferential section 1812 has, for example, a first circumferential section 18121 positioned on one side (an upper side in the drawing) of the axial section 1811 and a second circumferential section 18122 positioned on the other side (a lower side in the drawing) of the axial section 1811.

The first circumferential section 18121 and the second circumferential section 18122 are each provided with the connection end portion 1813.

A bending section 1814 is each formed at a boundary between the axial section 1811 and the circumferential section 1812.

A bending section 1815 is formed between the circumferential section 1812 and the connection end portion 1813.

Here, the bending section 1814 formed at a boundary between the axial section 1811 and the circumferential section 1812 may be referred to as an inner bending section 1814, and the bending section 1815 formed between the circumferential section 1812 and the connection end portion 1813 may be referred to as an outer bending section 1815.

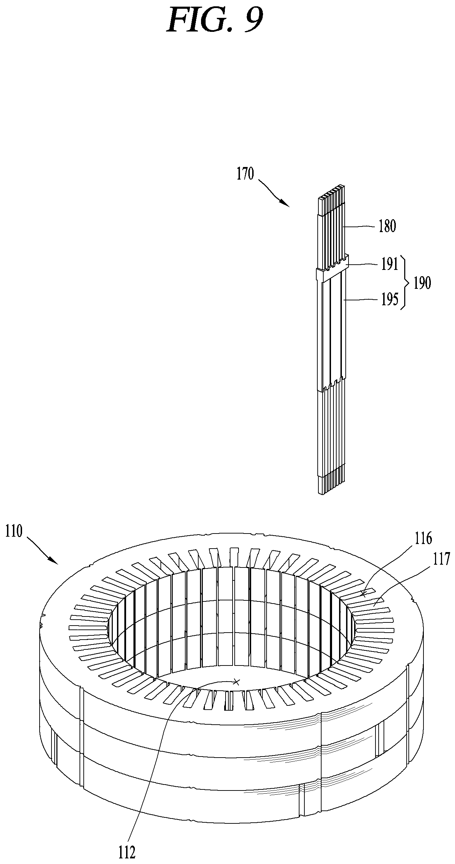

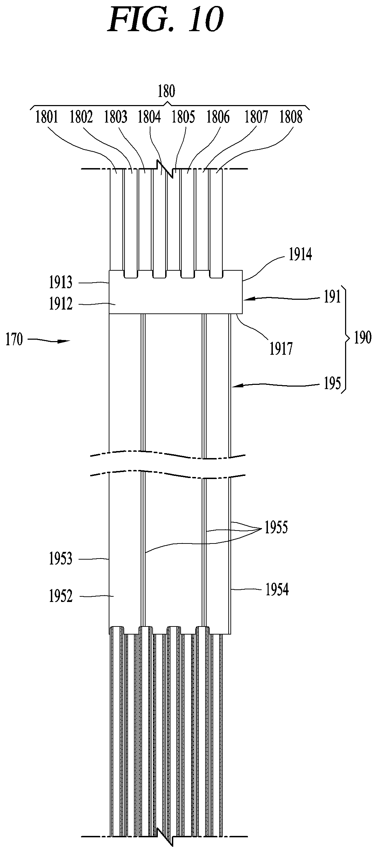

FIG. 9 is a perspective view prior to coupling a magnet wire module in FIG. 1, and FIG. 10 is a cross-sectional view subsequent to inserting the magnet wire module in FIG. 9. As shown in FIGS. 9 and 10, the magnet wire module 170 is provided with a plurality of magnet wires 180 each having a straight shape positioned along an axial direction, and a molding part 190 surrounding and fixing the plurality of magnet wires 180.

The molding part 190 is formed of a synthetic resin member.

The molding part 190 is provided with an outer body 191 positioned outside the slot 116.

The outer body 191 is provided with a stopper 1917 that comes into contact with an edge of the slot 116 along an axial direction.

The outer body 191 may be implemented, for example, in a rectangular parallelepiped shape.

The outer body 191 has, for example, both side portions 1911, 1912 along a circumferential direction of the stator core 110, an inner side portion 1913 and an outer side portion 1914 along a radial direction of the stator core 110.

Here, the both side portions 1911, 1912 are provided with a first side portion 1911 and a second side portion 1912 that are positioned opposite to each other.

The outer body 191 is provided with an upper side portion and a lower side portion arranged along an axial direction.

A width of the outer body 191 is formed to be larger than that of the slot 116.

The outer side portion 1914 of the outer body 191 is configured to be positioned radially at an outer side compared to an outer side surface of the slot 116.

In this embodiment, a lower side portion of the outer body 191 may be referred to as a "stopper 1917" in that it comes into contact with an edge of the slot 116 to limit the movement of the outer body 191 toward the stator core 110.

The molding part 190 is provided with an inner body 195 positioned inside the slot 116.

Thereby, the plurality of magnet wires 180 and the slot 116 may be electrically insulated.

The inner body 195 may be implemented, for example, in a rectangular parallelepiped shape.

The inner body 195 has, for example, both side portions 1951, 1952 along a circumferential direction of the stator core 110, an inner side portion 1953 and an outer side portion 1954 along a radial direction of the stator core 110. Here, the both side portions 1951, 1952 are provided with a first side portion 1951 and a second side portion 1952 that are positioned opposite to each other.

The inner body 195 is configured to be connected to the outer body 191.

One side (an upper side in the drawing) of the inner body 195 is integrally connected (formed) to a lower side portion of the outer body 191.

The other side (a lower side in the drawing) of the inner body 195 may be configured to be exposed to a lower side of the stator core 110, for example, by passing through the slot 116 of the stator core 110.

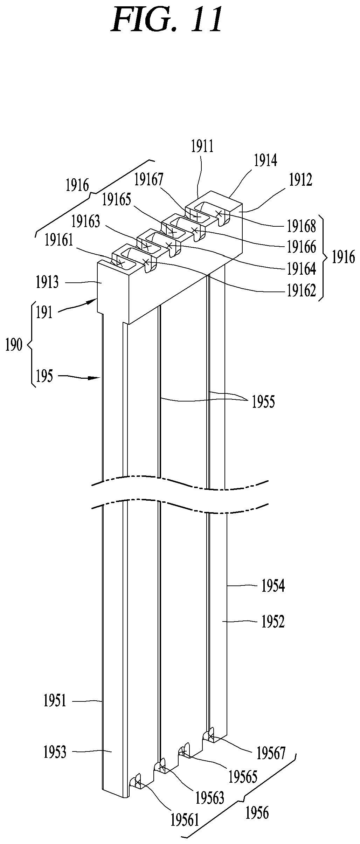

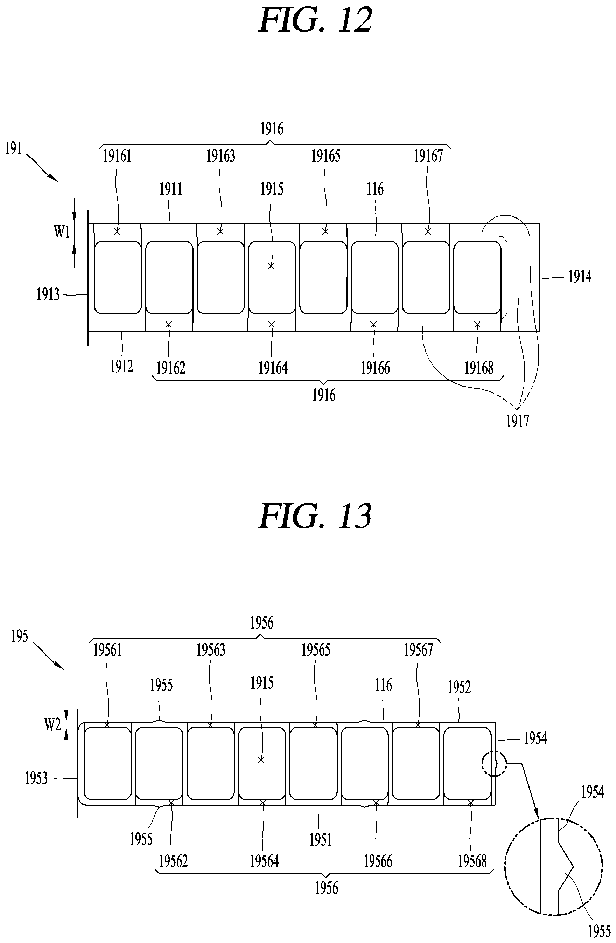

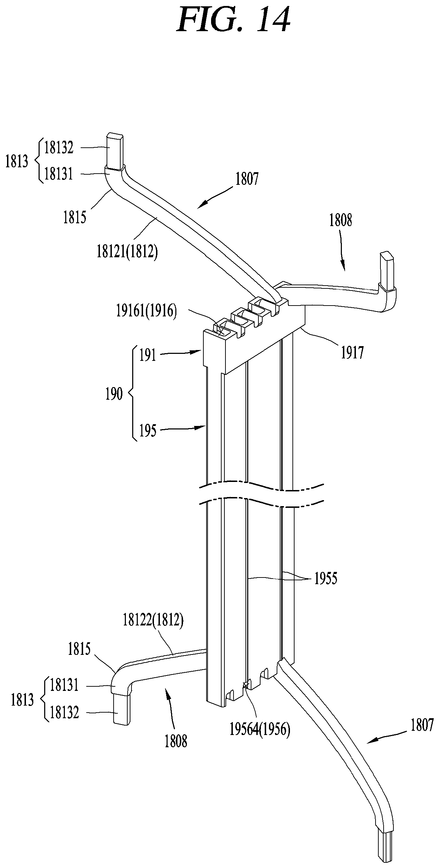

FIG. 11 is a perspective view of a molding part in FIG. 9, FIG. 12 is a plan view of the molding part in FIG. 11, FIG. 13 is a bottom view of the molding part in FIG. 11, and FIG. 14 is an enlarged view of the molding part in FIG. 13. As shown in FIGS. 11 to 14, in the present embodiment, the molding part 190 is provided with an outer body 191 positioned outside the slot 116 of the stator core 110 and an inner body 195 positioned inside the slot 116.

The outer body 191 is implemented in a roughly rectangular parallelepiped shape.

The outer body 191 is formed to surround the plurality of magnet wires 180 (the first magnet wire 1801 to the eighth magnet wire 1808).

Magnet wire receiving portions 1915 that can receive the plurality of magnet wires 180 (the first magnet wire 1801 to the eighth magnet wire 1808) are respectively formed inside the outer body 191.

The outer body 191 is configured to have an axial length (height) corresponding to a boundary between the axial section 1811 and the circumferential section 1812 of the plurality of magnet wires 180.

The inner body 195 is integrally formed on one side (a lower side in the drawing) of the outer body 191 along an axial direction.

The inner body 195 is implemented in a roughly rectangular parallelepiped shape.

As described above, the molding part 190 may be formed by inserting a plurality of magnet wires 180 (the first magnet wire 1801 to the eighth magnet wire 1808) arranged in a radial direction of the stator core 110 into a mold and injecting a molten synthetic resin into the mold.

The inner body 195 is provided with a protruding end portion that protrudes to an outside of the stator core 110 when coupled to the stator core 110 (slot 116).

A protruding end portion of the inner body 195 may be configured to have an axial length (height) corresponding to a boundary between the axial section 1811 and the circumferential section 1812 of the plurality of magnet wires 180.

Here, the outer body 191 is provided with a width that is larger than that of the slot 116.

Thereby, the outer body 191 may be positioned such that one side (a bottom in the drawing) comes into contact with an outside of the slot 116 along an axial direction.

The inner body 195 above is configured to are provided with a width smaller than that of the slot 116.

Thereby, the inner body 195 may be inserted into and coupled to the slot 116.

The inner body 195 is provided with a plurality of side portions (both side portions 1951, 1952, an inner side portion 1953, and an outer side portion 1954) facing an inner surface of the slot 116.

The inner body 195 may be configured to be press-fitted into an inside of the slot 116.

An outer surface of the inner body 195 is provided with a protruding portion 1955 that protrudes so as to come into contact with the inner surface of the slot 116.

The protruding portions 1955 may be formed, for example, on both side portions 1951, 1952 arranged on both sides of the inner body 1'95 along a circumferential direction of the stator core 110.

A spacing between the both end portions of the protruding portions 1955 formed on the both side portions 1951, 1952 of the inner body 195 may be formed to be larger than a width (circumferential width) of the slot 116.

This is to ensure that when the inner body 195 is inserted into the slot 116, protruding lengths of the protruding portions 1955 respectively formed on the both side portions 1951, 1952 of the inner body 195 are reduced and deformed such that the inner body 195 can be inserted into the slot 116 so as to come into close contact with the inner surface of the slot 116.

According to this configuration, when the inner body 195 is inserted into the slot 116, no gap may be generated between the protruding portion 1955 and an inner wall of the slot 116, thereby suppressing the occurrence of a clearance in the inner body 195.

A plurality of protruding portions 1955 may be provided on each of the both side portions 1951, 1952 of the inner body 195.

The protruding portion 1955 may be formed to extend in an axial direction.

In this embodiment, it is illustrated a case where two protruding portions 1955 are formed on each of the both side portions 1951, 1952 of the inner body 195, but this is only an example, and is not limited thereto.

In addition, in this embodiment, it is illustrated a case where the protruding portion 1955 of the inner body 195 is formed continuously with a long length along an axial direction, but may also be implemented as a plurality of protruding portions spaced apart from one another along an axial direction.

The protruding portion 1955 may be formed on an outer side portion 1954 of the inner body 195.

In this embodiment, it is illustrated a case where one protruding portion 1955 is formed on the outer side portion 1954 of the inner body 195, but is not limited thereto.

Meanwhile, the outer body 191 is provided with a bending section support portion 1916 that comes into contact with the bending section 1814 (inner bending section) of the plurality of magnet wires 180 to support the bending section 1814.

The bending section support portion 1916 is configured to support, for example, a side surface (an inner surface, a bottom surface) close to the stator core 110 among the inner bending sections 1814 of the plurality of magnet wires 180.

The bending section support portion 1916 is formed to be sunken in an axial direction from an outer end portion (an upper end portion in the drawing) of the outer body 191.

Thereby, bending for forming a circumferential section 1812 of the plurality of magnet wires 180 may be facilitated.

The bending section support portion 1916 has, for example, a first bending section support portion 19161 to an eighth bending section support portion 19168 that respectively support each bending section 1804 of the first magnet wire 1801 to the eighth magnet wire 1808.

The first bending section support portion 19161 to the eighth bending section support portion 19168 are alternately formed on both side portions 1911, 1912 of the outer body 191.

Specifically, when the first magnet wire 1801 positioned at an innermost side of the slot 116 is bent in a first direction of the circumferential direction of the stator core 110, the first bending section support portion 19161 is formed on the first side portion 1911 of the outer body 191.

The second magnet wire 1802 is bent in a second direction different from that of the first magnet wire 1801, and the second bending section support portion 1916 is formed on the second side portion 1912 of the outer body 191.

In this embodiment, the first magnet wire 1801, the third magnet wire 1803, the fifth magnet wire 1805, and the seventh magnet wire 1807 are respectively bent in the first direction from one side (an upper side in the drawing) of the stator core 110 along an axial direction.

The second magnet wire 1802, the fourth magnet wire 1804, the sixth magnet wire 1806, and the eighth magnet wire 1808 are respectively bent in the second direction from one side (an upper side in the drawing) of the stator core 110 along an axial direction.

A first bending section support portion 19161, a third bending section support portion 1916, a fifth bending section support portion 1916, and a seventh bending section support portion 1916 are respectively formed on the first side portion 1911 of the outer body 191.

The first bending section support portion 19161, the third bending section support portion 1916, the fifth bending section support portion 1916, and the seventh bending section support portion 1916 are formed to be spaced apart by a preset distance along a radial direction of the stator core 110.

A second bending section support portion 1916, a fourth bending section support portion 1916, a sixth bending section support portion 1916, and an eighth bending section support portion 19168 are respectively formed on the second side portion 1912 of the outer body 191.

The second bending section support portion 1916, the fourth bending section support portion 1916, the sixth bending section support portion 1916, and the eighth bending section support portion 19168, which are formed on the second side portion 1912 of the outer body 191 are spaced apart by a preset distance along a radial direction of the stator core 110.

The inner body 195 is provided with a bending section support portion 1956 that supports the bending section 1814 (inner bending section) of the plurality of magnet wires 180.

In this embodiment, the plurality of magnet wires 180 have a bending section 1814 formed between the axial section 1811 and the first circumferential section 18121, and a bending section 1814 formed between the axial section 1811 and the second circumferential section 18122, which are formed in different directions of the circumferential direction of the stator core 110.

Specifically, when the first circumferential section 18121 is bent to extend in the first direction from the axial section 1811, the second circumferential section 18122 may be bent from the axial section 1811 to extend in a second direction opposite to the first direction.

In this embodiment, the bending section 1814 formed between the axial section 1811 and the first circumferential section 18121 of the first magnet wire 1801 is bent in the first direction (counterclockwise), and the bending section 1814 formed between the axial section 1811 and the second circumferential section 18122 of the first magnet wire 1801 is bent in the second direction (clockwise).

A protruding end portion of the inner body 195 is formed with a first bending section support portion 19561 to an eighth bending section support portion 19568 that support the bending section 1814 of the first magnet wire 1801 to the eighth magnet wire 1808, respectively.

The first bending section support portion 19561 to the eighth bending section support portion 19568 are alternately formed on both side portions 1951, 1952 of the inner body 195.

Accordingly, the second bending section support portion 19562, the fourth bending section support portion 19564, the sixth bending section support portion 19564, and the eighth bending section support portion 19568 are formed on the first side portion 1951 of the inner body 195.

The first bending section support portion 19561, the third bending section support portion 19563, the fifth bending section support portion 19565, and the seventh bending section support portion 19567 are formed on the second side portion 1952 of the inner body 195.

By this configuration, the first magnet wire 1801 to the eighth magnet wire 1808 are arranged along a radial direction of the stator core 110, and the first magnet wire 1801 to the eighth magnet wire 1808 are inserted into a mold (not shown) for forming the molding part 1901.

A molten synthetic resin member is injected into the mold to form a plurality of magnet wire modules 170, respectively.

When the plurality of magnet wire modules 170 are formed, the magnet wire modules 170 are each inserted into and coupled to the slot 116 of the stator core 110 along an axial direction.

In this case, the inner body 195 may be press-fitted into an inside of the slot 116 as the plurality of protruding portions 1955 are deformed.

When the magnet wire modules 170 are each coupled to the slot 116 of the stator core 110, the plurality of magnet wires 180 of the plurality of magnet wire modules 170 are each bent in the first direction or the second direction along a circumferential direction of the stator core 110.

In this case, the plurality of magnet wires 180 may be supported by the bending section support portion 1916 of the outer body 191 and the bending section support portion 1956 of the inner body 195 in the molding part 190, thereby facilitating the bending operation of the plurality of magnet wires 180.

Here, an end portion of the circumferential section 1812 of the plurality of magnet wires 180 may be bent in an axial direction so as to each form the connection end portion 1813.

Among the plurality of magnet wires 180 inserted into the slot 116, the magnet wire 180 positioned on an inner side (a side closer to the center) of the slot 116 along a radial direction of the stator core 110 has a relatively short circumferential length, thereby further protruding the connection end portion 1813 along an axial direction.

A length of the connection end portion 1813 of the plurality of magnet wires 180 may be adjusted (cut) to a first length L1 or a second length L2 such that the end portion can be positioned at the same length (height) from the stator core 110 along an axial direction.

When the end portions of the plurality of magnet wires 180 are cut to have a constant length L1, L2 along an axial direction from the stator core 110, the connection end portions 1813 of the two magnet wires 180 (the first type magnet wire 180a) to be connected to each other are electrically connected by welding.

Specifically, the plurality of magnet wires 180 may be electrically connected to one another by welding the connection end portion 1813 of the first circumferential section 18121 and electrically connecting to one another by welding the connection end portion 1813 of the second circumferential section 18122.

When the welding of both end portions of the plurality of magnet wires 180 along an axial direction is completed, the connection end portions 1813a of the plurality of magnet wires 180 (the second type magnet wire 180b) formed with the extension portion may be coupled to the connection ring 220.

When the connection ring 220 is coupled to the end portions of the plurality of magnet wires 180 formed with the extension portion, the connection end portions 1813a connected to one another respectively protrude from the connection ring 220 along an axial direction.

The connection end portion 1813a protruding from the connecting ring 220 is electrically connected by welding.

Thereby, the plurality of phase coils 155 may be connected (Y-connected).

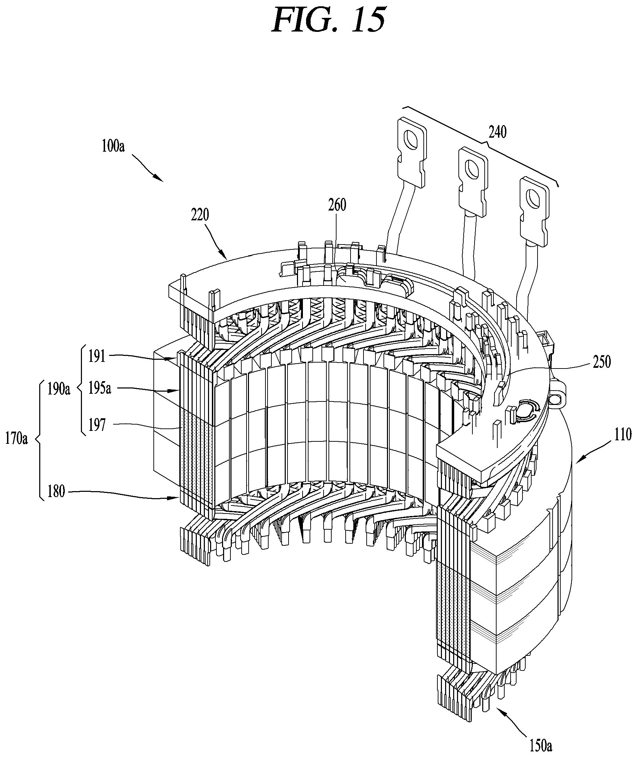

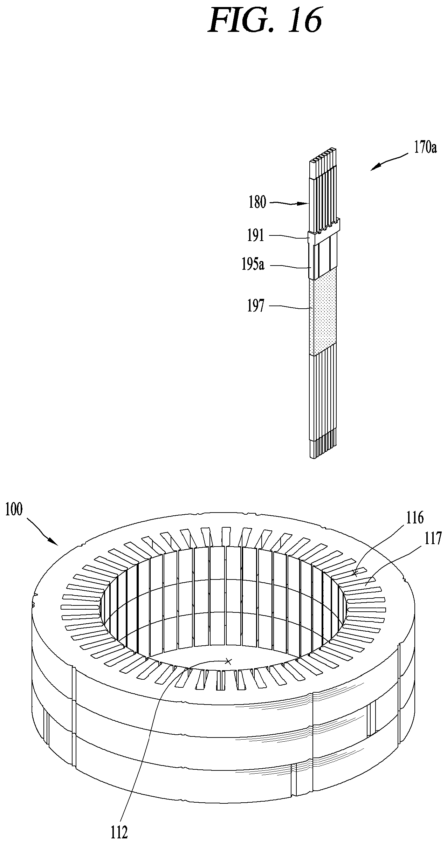

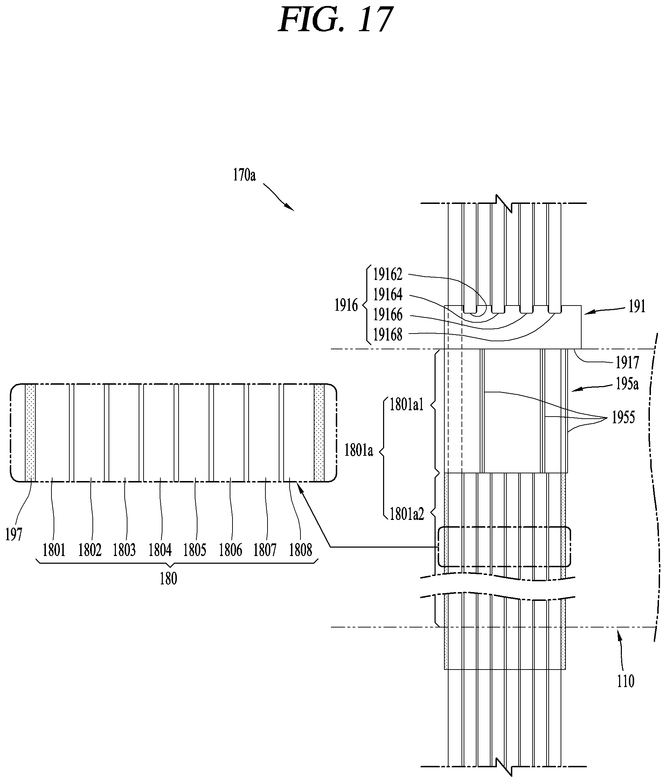

FIG. 15 is a cross-sectional view of a stator of a rotating electric machine according to another embodiment of the present disclosure, FIG. 16 is a perspective view prior to coupling a magnet wire module in FIG. 15, and FIG. 17 is an enlarged view of the magnet wire module in FIG. 15. As shown in FIGS. 15 to 17, a stator 100a of the rotating electric machine of this embodiment is provided with a stator core 110 and a stator coil 150a.

The stator core 110 is implemented in, for example, a cylindrical shape.

The stator core 110 is formed by laminating a plurality of electrical steel plates 112 in an insulated manner.

The stator core 110 is provided with a plurality of slots 116 and a plurality of teeth 118 that are alternately arranged along a circumferential direction.

The stator coil 150a is configured with a plurality of magnet wire modules 170a.

The plurality of magnet wire modules 170a are provided with, for example, a plurality of magnet wires 180 each having a straight shape positioned along an axial direction, and a molding part 190a formed to surround and fix the plurality of magnet wires 180.

The molding part 190a has, for example, an outer body 191 positioned outside the slot 116 and an inner body 195a positioned inside the slot 116.

The outer body 191 is implemented in a roughly rectangular parallelepiped shape.

The outer body 191 is configured with a width that is extended compared to the width of the slot 116.

The outer body 191 is provided with a stopper 1917 that comes into contact with an edge of the slot 116 along an axial direction.

The stopper 1917 may be formed to come into contact with both side edges of the slot 116 along a circumferential direction of the stator core 110 and an outer side edge of the slot 116 along a radial direction of the stator core 110.

The inner body 195a is formed on one side (a lower side in the drawing) of the outer body 191 along an axial direction.

The inner body 195a is implemented in a roughly rectangular parallelepiped shape.

The inner body 195a is provided with a reduced width compared to that of the slot 116 so as to be inserted into the slot 116.

An outer surface of the inner body 195a is provided with a protruding portion 1955 that can come into contact with an inner surface of the slot 116.

The inner body 195a may be formed to be press-fitted into an inside of the slot 116.

The protruding portions 1955 may be formed on both side surfaces of the inner body 195a along a circumferential direction of the stator core 110.

The protruding portions 1955 formed on both side portions 1951, 1952 of the inner body 195a may be respectively formed in a plurality of pieces.

A distance between the end portions of the protruding portions 1955 formed on both side portions 1951, 1952 of the inner body 195a may be formed to be slightly larger than a width of the slot 116.

Thereby, during the insertion of the inner body 195a, the protruding portion 1955 may be inserted into the slot 116 while being deformed to reduce the protruding length, and may come into close contact with the inner surface of the slot 116.

Two protruding portions 1955 may be respectively formed on both side portions 1951, 1952 of the inner body 195a.

The protruding portions 1955 may be formed on an outer side portion 1954 of the inner body 195a along a radial direction of the stator core 110.

The protruding portion 1955 formed on the outer side portion 1954 of the inner body 195a may be implemented as one piece, for example.

The protruding portion 1955 of the inner body 195a may be formed to extend along an axial direction.

The protruding portion 1955 may be formed with a length corresponding to that of the inner body 195a.

Meanwhile, the plurality of magnet wires 180 are provided with an insertion section 1801a that is inserted into the slot 116 of the stator core 110.

The inner body 195a is configured to have a shortened length compared to that of the insertion section 1801a.

The inner body 195a may be formed with, for example, a length less than half the length of the insertion section 1801a.

In this embodiment, a length of the inner body 195a may be formed with, for example, a length of 20-40% of the insertion section 1801a.

The insertion section 1801a has, for example, a first section 1801a1 insulated by the inner body 195a and a second section 1801a2 insulated by an insulating material.

The insulating material may be implemented as, for example, an insulating paper 197.

The insulating paper 197 may be implemented, for example, in a rectangular shape.

Specifically, the insulating paper 197 may be implemented in a rectangular shape having a width and length capable of surrounding a circumference of the second section 1801a2 of, for example, a plurality of magnet wires 180 (the first magnet wire 1801 to the eighth magnet wire 1808).

The second section 1801a2 may be surrounded by the insulating paper 197, for example, prior to the plurality of magnet wires 180 being inserted into the plurality of slots 116.

Thereby, a size of the inner body 195a may be reduced to facilitate the manufacture of the molding part 190a.

By this configuration, the plurality of magnet wires 180 (the first magnet wire 1801 to the eighth magnet wire 1808) are arranged along a radial direction of the stator core 110 inside a mold (not shown), and a molten synthetic resin member is injected into the mold to form the molding part 190a.

The second section 1801a2 of the plurality of magnet wire modules 170a is surrounded with an insulating paper 197 to ensure insulation.

The plurality of magnet wire modules 170a are respectively inserted into and coupled to the plurality of slots 116 of the stator core 110.

A plurality of magnet wires 180 of the plurality of magnet wire modules 170a are each bent in a first direction or a second direction along a circumferential direction of the stator core 110.

The end portions of the plurality of magnet wires 180 are cut such that the end portions of the plurality of magnet wires 180 are positioned at a constant distance from the stator core 110 along an axial direction.

Two connection end portions 1813 to be connected to each other among the plurality of magnet wires 180 are welded to be electrically connected.

Next, the connection ring 220 is coupled to the connection end portion 1813a of the plurality of magnet wires 180 (the second type magnet wire 180b) formed with an extension portion among the plurality of magnet wires 180.

A plurality of phase coils 155 are formed by welding the connection end portions 1813a respectively protruding in an axial direction from the connecting ring 220.

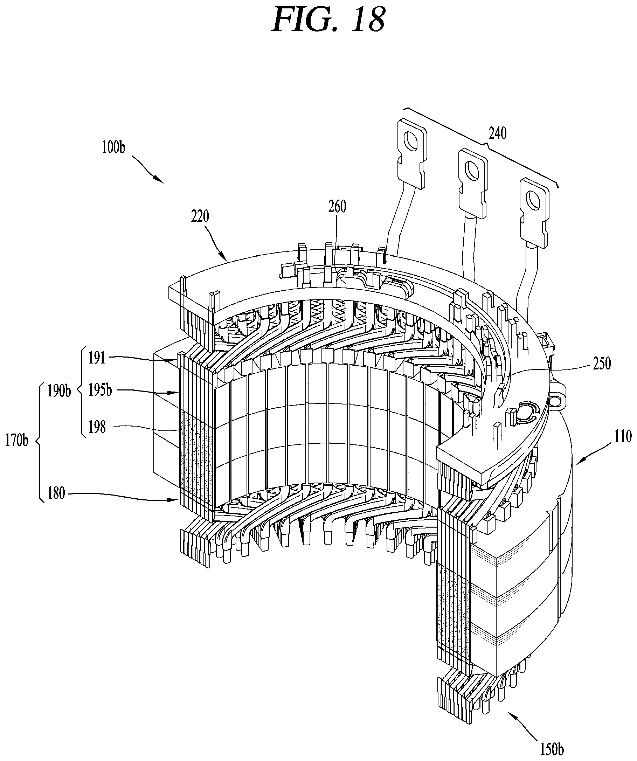

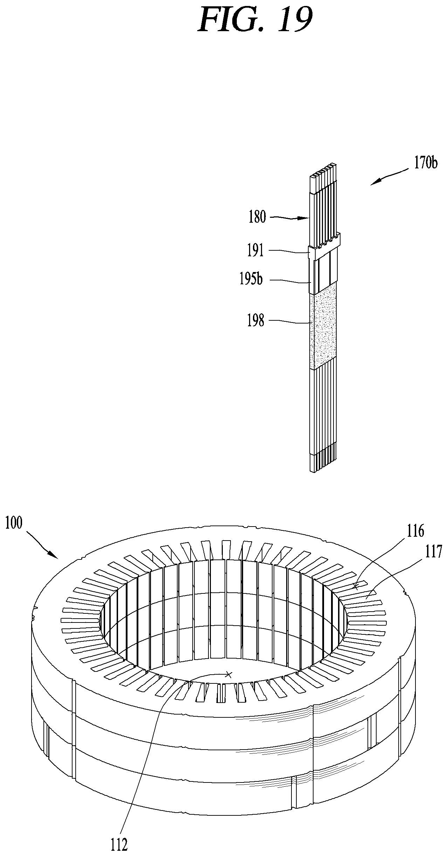

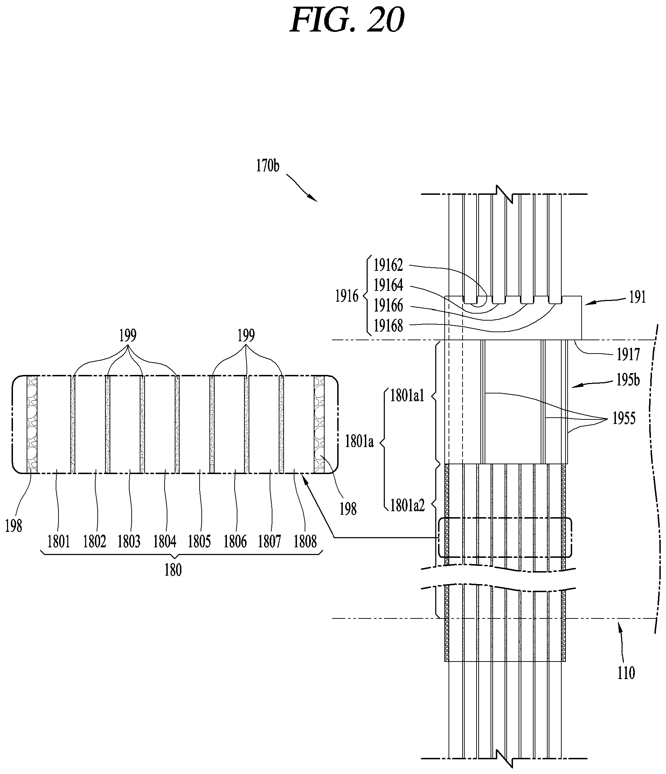

FIG. 18 is a cross-sectional view of a stator of a rotating electric machine according to another embodiment of the present disclosure, FIG. 19 is a perspective view prior to coupling a magnet wire module in FIG. 18, and FIG. 20 is an enlarged view of the magnet wire module in FIG. 18. As shown in FIGS. 18 to 20, a stator 100b of the rotating electric machine of the present embodiment is provided with a stator core 110 and a stator coil 150b.

The stator core 110 has a cylindrical shape.

The stator core 110 is formed by laminating a plurality of electrical steel plates 112 in an insulated manner.

The stator core 110 is provided with a plurality of slots 116 and a plurality of teeth 118.

The stator coil 150b is configured with a plurality of magnet wire modules 170b.

The plurality of magnet wire modules 170b are provided with a plurality of magnet wires 180 respectively having a straight shape positioned along an axial direction, and a molding part 190b formed to surround and fix the plurality of magnet wires 180.

The molding part 190b has, for example, an outer body 191 positioned outside the slot 116 and an inner body 195b positioned inside the slot 116.

The outer body 191 is implemented in a roughly rectangular parallelepiped shape.

The outer body 191 is configured with a width that is extended compared to the width of the slot 116.

The outer body 191 is provided with a stopper 1917 that comes into contact with an edge of the slot 116 along an axial direction.

The stopper 1917 may be formed to come into contact with both side edges of the slot 116 along a circumferential direction of the stator core 110 and an outer side edge of the slot 116 along a radial direction of the stator core 110.

The inner body 195b is formed on one side (a lower side in the drawing) of the outer body 191 along an axial direction.

The inner body 195b is implemented in a roughly rectangular parallelepiped shape.

The inner body 195b is provided with a reduced width compared to that of the slot 116 so as to be inserted into the slot 116.

An outer surface of the inner body 195b is provided with a plurality of protruding portions 1955 that come into contact with an inner surface of the slot 116.

In this embodiment, the plurality of protruding portions 1955 are formed on both side surfaces of the inner body 195b along a circumferential direction of the stator core 110 and on an outer surface of the inner body along a radial direction of the stator core.

The inner body 195b is configured to be press-fitted into an inside of the slot 116.

The protruding portion 1955 of the inner body 195b may be configured to come into contact with an inner surface of the slot 116 while being deformed when being inserted into and coupled to the slot 116.

The plurality of magnet wires 180 are provided with an insertion section 1801a that is inserted (positioned) into the slot 116.

The inner body 195b is formed to have, for example, a reduced length compared to that of the insertion section 1801a.

The inner body 195b may be formed with, for example, a length less than half the length of the insertion section 1801a.

In this embodiment, the inner body 195b may be formed with a length of 20-40% of the insertion section 1801a.

The insertion section 1801a of the plurality of magnet wires 180 has, for example, a first section 1801a1 insulated by the inner body 195b and a second section 1801a2 insulated by an insulating material.

In this embodiment, the insulating material that surrounds and insulates the second section 1801a2 is configured with, for example, a liquid foam material 199 applied to the plurality of magnet wires 180 prior to the plurality of magnet wires 180 being inserted into the slot 116 and an insulating sheet 198 that surrounds the liquid foam material 199.

The liquid foam material 199 may be implemented as, for example, liquid epoxy.

The liquid foam material 199 may be configured to foam and harden when, for example, the plurality of magnet wires 180 are inserted into and coupled to the slot 116 and then heated to a preset temperature.

By this configuration, the plurality of magnet wires 180 (the first magnet wire 1801 to the eighth magnet wire 1808) are arranged along a radial direction of the stator core 110 inside a mold, and a molten synthetic resin member is injected into the mold to form the molding part 190b.

Next, when the molding part 190b is formed, the liquid foam material 199 is applied to the second section 1801a2 of the plurality of magnet wire modules 170, and the liquid foam material 199 is surrounded with the insulating sheet 198 to prevent a leakage of the liquid foam material 199.

Here, a circumference of the second section 1801a2 is surrounded with the insulating sheet 198, and the liquid foam material 199 may be injected into the insulating sheet 198.

The plurality of magnet wire modules 170 are respectively inserted into and coupled to the plurality of slots 116 of the stator core 110.

When the insertion of the plurality of magnet wire modules 170 into the plurality of slots 116 is completed, the plurality of magnet wire modules 170b are heated such that the plurality of magnet wire modules 170b can rise to a preset temperature.

Thereby, the liquid foam material 199 may be foamed to be filled into the slot 116.

When the foam material hardens over time, the plurality of magnet wires 180 of the plurality of magnet wire modules 170 may be bent in a first direction or a second direction, respectively, along a circumferential direction of the stator core 110.

The end portions of the plurality of magnet wires 180 are respectively cut such that the end portions of the plurality of magnet wires 180 are positioned at a constant distance from the stator core 110 along an axial direction.

Two connection end portions 1813 to be connected to each other among the plurality of magnet wires 180 are welded to be electrically connected.

Next, the connection ring 220 is coupled to the connection end portion 1813a of the plurality of magnet wires 180 (the second type magnet wire 180b) formed with an extension portion among the plurality of magnet wires 180.

A plurality of phase coils 155 are formed by welding the connection end portions 1813a respectively protruding in an axial direction from the connecting ring 220.

In the above, specific embodiments of the present disclosure have been shown and described. However, the present disclosure may be implemented in various forms without departing from the concept or gist thereof, and thus the embodiments described above should not be limited to specific contents for carrying out the disclosure.

Furthermore, the foregoing embodiments should be broadly construed within the scope of the technical concept defined by the appended claims even though they are not specifically disclosed in the detailed description herein. Moreover, all changes and modifications within the technical scope of the claims and the equivalent scope thereof should be construed to be included in the appended claims.

## Claims

1. A stator of a rotating electric machine, the stator comprising:
a stator core having a plurality of slots spaced apart from one another along a circumferential direction; and
a stator coil wound around the stator core,
wherein the stator coil is provided with a plurality of magnet wire modules having a plurality of magnet wires each having a straight shape positioned along an axial direction and a molding part surrounding and fixing the plurality of magnet wires,
wherein the plurality of magnet wire modules are respectively inserted into the plurality of slots, and
wherein the plurality of magnet wires are bent along a circumferential direction of the stator core and then electrically connected to come into contact with one another.

2. The stator of claim 1, wherein the molding part is provided with an outer body 191 positioned outside the plurality of slots.

3. The stator of claim 2, wherein the outer body 191 is provided with a stopper that comes into contact with an edge of the slot along an axial direction.

4. The stator of claim 2, wherein the plurality of magnet wires is each provided with a bending section that bends along a circumferential direction of the stator core, and
wherein the outer body 191 is provided with a bending section support portion that comes into contact with the bending section to support the bending section.

5. The stator of claim 1, wherein the molding part is provided with an inner body positioned inside the slot.

6. The stator of claim 5, wherein the inner body is provided with an outer surface spaced apart from an inner surface of the slot, and
wherein the outer surface of the inner body is provided with a protruding portion that protrudes so as to come into contact with the inner surface of the slot.

7. The stator of claim 6, wherein the inner body is provided with both side surfaces arranged on both sides along a circumferential direction of the stator core and an inner side surface and an outer side surface arranged on both sides along a radial direction of the stator core, and
wherein the protruding portions are respectively provided on the both side surfaces and the outer side surface.

8. The stator of claim 6, wherein the protruding portion is formed to extend along an axial direction.

9. The stator of claim 5, wherein the inner body is provided with a protruding end portion that protrudes outward from the slot along an axial direction of the stator core,
wherein the plurality of magnet wires are provided with bending sections that bend along a circumferential direction of the stator core, and
wherein the protruding end portion is provided with bending section support portions that come into contact with the bending sections of the plurality of magnet wires to support the bending sections.

10. The stator of claim 9, wherein the plurality of magnet wires arranged in a radial direction of the stator core are alternately bent to one side and the other side of the circumferential direction of the stator core, and
wherein the bending section support portions of the inner body are formed alternately on both side surfaces along the circumferential direction of the stator core.

11. The stator of claim 5, wherein the plurality of magnet wires are provided with an insertion section positioned inside the slot along an axial direction of the stator core,
wherein the inner body is provided with a shortened length compared to a length of the slot along the axial direction of the stator core, and
wherein the insertion section of the plurality of magnet wires is provided with a first section insulated by the inner body and a second section insulated by an insulating material.

12. The stator of claim 11, wherein the second section is surrounded by a plate-shaped insulating sheet prior to the plurality of magnet wires being inserted into the plurality of slots.

13. The stator of claim 11, wherein the insulating material of the second section is provided with a liquid foam material applied to the plurality of magnet wires prior to the plurality of magnet wires being inserted into the plurality of slots, and an insulating paper surrounding the liquid foam material.

14. The stator of claim 13, wherein the liquid foam material is configured to foam by heating subsequent to the plurality of magnet wires being inserted into the plurality of slots.

15. The stator of claim 1, wherein the molding part comprises:
an outer body 191 positioned outside a slot of the stator core; and
an inner body connected to the outer body 191 and positioned inside the slot.

16. The stator of claim 15, wherein the outer body 191 is provided with a stopper that comes into contact with an edge of the slot along an axial direction.

17. The stator of any one of claims 1 to 16, wherein the plurality of magnet wires are each provided with an axial section positioned along the axial direction and a circumferential section extending in a circumferential direction from the axial section,
wherein the axial section passes through an inside of the slot,
wherein the circumferential section is positioned outside the slot, and
wherein the plurality of magnet wires allow the circumferential sections of different magnet wires to be electrically connected to one another.

18. A method of manufacturing a stator of a rotating electric machine comprising a stator core having a plurality of slots along a circumferential direction and a stator coil having a plurality of magnet wires each having a straight shape positioned along an axial direction and capable of being inserted into the slots of the stator core, the method comprising:
arranging the plurality of magnet wires to be spaced apart along a radial direction of the stator core, and forming a molding part surrounding and fixing a circumference of the plurality of magnet wires to form a plurality of magnet wire modules;
inserting the plurality of magnet wire modules into the plurality of slots, respectively;
bending the plurality of magnet wires to one side or the other side along a circumferential direction of the stator core so as to come into contact with one another; and
electrically connecting the plurality of magnet wires to form the stator coil.

19. The method of claim 18, further comprising:
cutting end portions of the plurality of magnet wires so as to allow the end portions of the plurality of magnet wires to have the same length from the stator core along an axial direction prior to forming the stator coil.

20. The method of claim 18 or 19, wherein the plurality of magnet wires are provided with an insertion section positioned inside the slot, and
wherein the molding part is provided with an inner body formed to surround a part of the insertion section, and
wherein the method further comprising:
insulating the remainder of the insertion section prior to inserting the plurality of magnet wires into the plurality of slots.
